(19) Europäisches Patentamt
European Patent Office
Office européen des brevets

(11) **EP 4 049 116 B1**

(12) **EUROPEAN PATENT SPECIFICATION**

(45) Date of publication and mention
of the grant of the patent:
**01.05.2024 Bulletin 2024/18**

(21) Application number: **20799798.2**

(22) Date of filing: **21.10.2020**

(51) International Patent Classification (IPC):
**G06F 3/01** (2006.01)

(52) Cooperative Patent Classification (CPC):
**G06F 3/016**

(86) International application number:
**PCT/GB2020/052636**

(87) International publication number:
**WO 2021/079101 (29.04.2021 Gazette 2021/17)**

(54) **TACTILE PIXELS**

TAKTILE PIXEL

PIXELS TACTILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2019 GB 201915283**

(43) Date of publication of application:
**31.08.2022 Bulletin 2022/35**

(73) Proprietor: **University Of Bath
Bath, Bath and North East Somerset BA2 7AY
(GB)**

(72) Inventor: **MOHAMMADI, Ali
Bath BA2 7AY (GB)**

(74) Representative: **Haseltine Lake Kempner LLP
One Portwall Square
Portwall Lane
Bristol BS1 6BH (GB)**

(56) References cited:
**WO-A1-2013/118122     US-A1- 2018 253 147**

**Description**

**BACKGROUND**

Tactile pixels, otherwise known as taxels may be useful as human-machine interface devices for a number of applications, for example, to provide active interfaces to be used by blind or partially sighted people, for virtual reality applications (such as virtual training for surgeons), as sensory substitution devices, and in the automotive industry, for example to provide tactile feedback to assist a driver whilst driving. An array of tactile pixels can be used to convert pixelated graphical information generated e.g. by a mobile phone or computer to tactile stimulus.

Different approaches have been used to create tactile pixels based on electro-tactile, piezoelectric and electromagnetic transduction mechanisms. However many of these approaches suffer from lack of robustness (not being robust enough to withstand being regularly touched), low stimulation depth (making it hard for a user to detect whether a taxel is "on" or "off"), low spatial resolution, or low refresh rate. Using an electromagnetic transduction mechanism enables the taxel to be controlled with a high precision and a quick response rate - thereby providing a high refresh rate to an array composed of this type of taxel, and also provides a high stimulation depth. However, resolution can be limited by the size of the electromagnetic actuators used to control each taxel.

Some background information can be found in US2018/253147A1 and WO2013/118122A1. US2018/253147A1 relates to a haptic display system comprising an array of vibratory elements, each vibratory element having a natural frequency different from the natural frequency of every other vibratory element in the array, a voice coil coupled to the array to impart vibrational energy to the array, and a microcontroller coupled to the voice coil to drive the array. WO2013/118122A1 relates to providing a tactile transducer coupled to an anchor; providing a low frequency electrical signal to the tactile transducer, and inducing a movement in the anchor.

SUMMARY

According to a first aspect of the invention there is provided an apparatus according to claim 1.

Using a solenoid to control the taxels enables a fast refresh rate and high precision for the taxels. The first aspect of the invention enables control of first and second taxels from a single solenoid. Therefore, the taxels can be located closer together which enables a higher resolution when used in an array of taxels. Since the first and second taxels have different mechanical resonance frequencies, they can be located close to each other and still controlled to vibrate selectively.

The first and second taxels each comprise a cantilever beam attached to a frame at an attached end, wherein the magnetic portion is located at an unattached end of the cantilever beam.

This arrangement provides a strong level of vibration due to the mechanical resonance of the taxel (e.g. a sufficient level of vibration for detection by a user), whilst still being robust enough to be touched by a user.

The first taxel cantilever beam and the second taxel cantilever beam may each have different dimensions.

Controlling the mechanical resonance of the taxels by controlling the beam dimensions means that different resonance frequencies can be provided whilst keeping a mass of the end of the taxel the same. This means that identical tactile pads can be attached to the end of each taxel so that taxels having different mechanical frequencies feel similar to a user.

The first taxel cantilever beam and the second taxel cantilever beam may each have different widths.

Controlling the mechanical resonance of the taxels by controlling the beam widths manufactured e.g. by 3D printing, or using MEMS technology.

In some examples, the mechanical resonance of the taxels may be additionally or alternatively controlled by controlling the materials, or post-processed properties of the taxels.

The first and second taxels may both be attached to a single frame.

This arrangement means that the first and second taxels can be formed into a compact taxel array more easily.

The first and second taxels and the frame may be formed by 3D-printing (additive manufacturing). In some examples, all or part of the first and second taxels and the frame may be formed by another mass-production technique suitable for plastic or resinous materials such as using injection-moulding, vacuum-forming, blow-moulding or stamping technologies. This enables the taxel array to be produced in an efficient and low cost manner and produces taxels that are robust to being touched by a user. Other techniques, such as MEMS integrated circuit manufacturing processes may also be used.

The magnetic portion may comprise a soft ferromagnet, which may be easier to integrate in 3D printing or MEMS process compared with hard ferromagnets. This is due to soft ferromagnetic materials being easier to process. For example nickel can be processed at low temperatures which enables a powder to be integrated into 3D-printing. soft ferromagnetic materials may also be more compatible with silicon MEMS processing techniques. Hard ferromagnetic materials are usually alloys, which tend to require harsher conditions such as very high temperatures to form the magnetic polarity.

In some examples the cantilever beam and the support frame may be formed from silicon.

These materials are robust yet flexible and therefore enable the taxel to vibrate with an amplitude that is detectable by a user while also increasing the useable lifetime of the taxel.

The solenoid may have a further electrical input signal at a third frequency, and the apparatus may further comprise a third taxel, comprising a magnetic portion, located at an end of the solenoid, wherein the third taxel has a third mechanical resonance frequency, different from the first and second frequencies, such that applying the third electrical input signal to the solenoid causes the third taxel to vibrate.

This enables more taxels to be located in a particular area, thereby increasing the resolution of an array including the apparatus, whilst still enabling each of the taxels to be selectively controllable.

The solenoid may have a further electrical input signal at a fourth frequency and the apparatus may further comprise a fourth taxel, comprising a magnetic portion located above the end of the solenoid, wherein the fourth taxel has a fourth mechanical resonance frequency, different from the first, second and third mechanical resonance frequencies, such that applying the fourth electrical input signal to the solenoid causes the fourth taxel to vibrate.

This enables more taxels to be located in a particular area, thereby increasing the resolution of an array of taxels, whilst also enabling the taxels to be selectively controllable. Additional taxels may also be provided, each having a different mechanical resonance, and a corresponding electrical input signal.

The apparatus may comprise a controller, wherein the controller is suitable to apply the first electrical input signal to the solenoid to vibrate the first taxel, and/or apply the second electrical input signal to the solenoid to vibrate the second taxel, and to apply the first and second frequencies to vibrate the first taxel and the second taxel, either simultaneously or individually.

This enables the taxels to be vibrated individually or at the same time.

The controller may be suitable to control the amplitude of the first and/or second electrical input signal in order to control the vibration amplitude of the first and/or second taxel.

This may enable the first and/or second taxels to be vibrated at different levels (i.e. stronger and weaker vibrations can be produced) which can be used to convey more information from the taxel to a user.

The controller may be suitable to control the first and second electrical input signals to each be applied at a relatively higher amplitude when the first and second electrical input signals are applied to the solenoid simultaneously, and is suitable to control the first and second electrical input signals to each be applied at a relatively lower amplitude when the first and second electrical input signals are applied to the solenoid individually.

As energy is split between multiple frequency components when vibrating both taxels simultaneously, increasing the amplitude of the third electrical signal means that the vibration amplitude of the taxels can be kept at a similar level, whether only one taxel is vibrating or if both taxels are vibrating simultaneously. However, if power is at a premium, for example in a battery powered mobile device, then the power can be shared across the individual taxels associated with the respective solenoid as required.

According to a second aspect of the invention there is provided a vibrotactile display according to claim 14.

A vibrotactile display as defined by the second aspect provides a robust display with an increased resolution as with this arrangement only a single solenoid is required to support two (or more) taxels.

The vibrotactile display of the second aspect may comprise an apparatus according to the first aspect.

In some examples there is provided an apparatus comprising a vibrotactile display according to the second aspect, wherein the apparatus comprises one of a steering wheel, a seat bolster, a computer controller or games console controller and a surgical simulation instrument.

In some examples, there is provided a taxel array comprising a first taxel, comprising a magnetic portion, the first taxel having a first mechanical resonance frequency such that first taxel vibrates in response to the magnetic portion being energised by a first electromagnetic signal having a first frequency; and a second taxel, comprising a magnetic portion, the second taxel having a second mechanical resonance frequency such that second taxel vibrates in response to the magnetic portion being energised by a second electromagnetic signal having a second frequency.

The taxel array may further comprise a third taxel, comprising a magnetic portion, the third taxel having a third mechanical resonance frequency such that the third taxel vibrates in response to the magnetic portion being energised by a third electromagnetic signal having a third frequency.

The taxel array may further comprise a fourth taxel, comprising a magnetic portion, the fourth taxel having a fourth mechanical resonance frequency such that the fourth taxel vibrates in response to the magnetic portion being energised by a fourth electromagnetic signal having a fourth frequency.

The taxel array may comprise any of the features of the first aspect.

## BRIEF DESCRIPTION OF THE DRAWINGS

Non-limiting examples will now be described with reference to the accompanying drawings, in which

Figure 1 shows a schematic representation of an example taxel apparatus.

Figure 2 shows a top-down view of the example apparatus of Figure 1.

Figure 3 shows a schematic representation of another example taxel apparatus.

Figure 4 shows a schematic representation of a vibrotactile display, comprising the taxel apparatus of Figure 1.

**DETAILED DESCRIPTION**

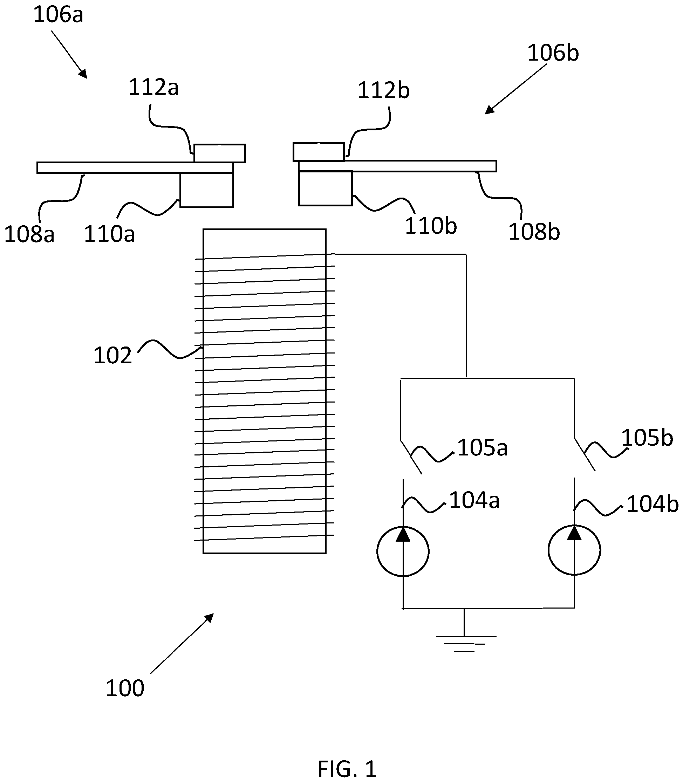

Figure 1 shows a side view of an example taxel apparatus 100. The apparatus 100 comprises a solenoid 102 which may be, for example, 8mm in diameter and in some examples may be built into a multilayer printed circuit board. Providing the solenoid as a built in component of a printed circuit board can reduce the overall thickness of the apparatus. The solenoid 102 has a first electrical input signal 104a at a first frequency and a second electrical input signal 104b at a second frequency. The first and second frequencies may each be generated, for example, by electronic oscillators, which may be integrated into a microcontroller. In the example shown in Figure 1, the first and second electrical input signals 104a and 104b can be applied to the solenoid individually or simultaneously (or neither can be applied) at any given time, using switches 105a and 105b.

The apparatus 100 also includes a first taxel 106a which comprises a cantilevered support beam 108a, with a magnetic portion 110a located at an unattached end of the beam 108a. The taxel 106a is positioned relative to the solenoid 102 such that when the solenoid 102 is powered, a magnetic force is applied to the magnetic portion 110a, for example causing the magnetic portion 110a to be repelled away from the solenoid 102. The magnetic portion 110a is therefore located above an end of the solenoid, for example aligned with and spaced from one base of the solenoid 102. In some examples, the magnetic portion is located between 1 and 3mm from the end of the solenoid. In some examples, the taxel is positioned on an adjustable metal platform such that the distance between the magnetic portion and the end of the solenoid is adjustable (for example, using a spring-bolt system). The metal platform may also act as a heat sink which can counteract any temperature increase from the solenoid. In some examples, the radial distance of the magnetic portion of the taxel from the axis of the solenoid is less than the radius of the solenoid coil.

In some examples, the magnetic portion 110a may be a separate part (e.g. a stainless steel part) that is attached to the beam 108a. In other examples the magnetic portion 110a may be part of the beam 108a, for example the beam 108a may be formed from a ferromagnetic material or may be impregnated with ferromagnetic powder. In some examples, the magnetic portion 110a may be a layer of ferromagnetic material (e.g. nickel) that is deposited onto the beam 108a.

In some examples, the magnetic portion 110a may be formed from a soft ferromagnetic material such as Nickel, Iron or NiFe. In other examples the magnetic portion 110a may be formed from a hard ferromagnetic material such as CoPt, FePt or NdFeB.

The cantilever support beam 108a may be attached to a frame (not shown in Fig.1) at an attached end, which may be located relatively further from the axis of the solenoid 102 and may be free to vibrate at an opposite, unattached end, which may be located relatively closer to the axis of the solenoid 102. In the example shown in Figure 1, the magnetic portion 110a is located at the unattached end of the beam 108a to increase the amplitude of the vibration produced at the taxel 106a.

In the example shown in Figure 1, the first taxel 106a also comprises a tactile protrusion 112a or pad, located on an opposite side of the beam 108a from the solenoid 102, which is arranged to be touched during use of the apparatus 100 to transfer the vibrations of the first taxel 106a to a user's hand. The tactile protrusion 112a may be formed integrally with the beam 108a or may be attached to the beam 108a. The tactile protrusion 112a is located at the unattached end of the beam 108a to increase the amplitude of the vibration felt by a user from the taxel 106a.

The first taxel 106a has a first mechanical resonance frequency such that applying the first electrical input signal 104a to the solenoid 102 causes the first taxel 106a to vibrate at the first mechanical resonance frequency. In the example shown in Figure 1, the mechanical resonance frequency of the first taxel 106a can be controlled by controlling the mass of the first taxel 106a, or the stiffness of the beam 108a.

For example, a simplified determination of the mechanical resonance behaviour of the first taxel 106a can be provided by the mass-spring model. In a case where the mass is concentrated on the unattached end of the beam 108a and the stiffness is only related to the beam 108a, the mechanical resonance behaviour can be described by:

$$m\frac{d^2z}{dt^2} + \zeta\frac{dz}{dt} + kz = F$$

Where z is the displacement of the unattached end of the taxel in response to the applied force *F, k* is the stiffness of

the beam, $\zeta$ is the damping ratio and m is the mass at the unattached end of the beam.

The resonance frequency $\omega_n$ of the taxel is then determined by:

$$\omega_n = \sqrt{k/m}$$

The beam stiffness k is a function of the beam geometry. For a beam with a rectangular cross section such as the beam 108a shown in Figure 1, this is defined based on the beam length $l$, width w and thickness $t$ as:

$$k \propto \frac{wt^3}{l^3}$$

The mechanical resonance frequency of the first taxel 106a can therefore be controlled by controlling dimensions of the first taxel 106a such as the width, length or thickness of the beam 108a.

The apparatus 100 additionally comprises a second taxel 106b which comprises a cantilever beam 108b, a magnetic portion 110b and a tactile protrusion 112b, arranged similarly to the first taxel 106a. In the example shown in Figure 1, the first and second taxels 106a and 106b are arranged in a symmetric arrangement which enables the magnetic portions 110a and 110b of each taxel to be simultaneously aligned with one end of the solenoid 102 (although other arrangements that enable the magnetic portions to experience a magnetic force from one end of the solenoid could also be used). The unattached end of the first taxel 106a is spaced from the unattached end of the second taxel 106b to isolate the vibrating parts of the taxels 106a, 106b, to reduce sympathetic vibrations between the first and second taxels 106a and 106b. In some examples, there may be an air gap between the unattached ends of the first and second taxels 106a and 106b. The minimum size needed to avoid vibrations being transmitted between the taxels will depend on the Q-factor of the mechanical resonance, which will depend on the particular manufacturing technology used among other factors. For example, for 3D printed taxels an air gap of 1mm may be used. In some examples, for 3D printed taxels, an air gap of at least 0.5mm may be used.

The second taxel 106b is arranged to have a mechanical resonance at a different frequency from the mechanical resonance of the first taxel 106a. This enables the first and second taxels 106a, 106b to be controlled to vibrate selectively from a single solenoid 102, and also reduces sympathetic vibration between the first and second taxels 106a, 106b. The mechanical resonance of the second taxel 106b may be controlled to be different from the mechanical resonance of the first taxel 106a, for example by controlling the stiffness or mass of the second taxel 106b such as the thickness, width or length of the beam 108b or by adding a weight to either the first or second taxel 106a, 106b. The second electrical input signal 104b has a frequency that is chosen such that applying the second electrical input signal 104b to the solenoid 102 causes the second taxel 106b to vibrate at its mechanical resonance frequency.

Using a soft ferromagnet material for the magnetic portion means that when the magnetic field is exerting a force on the magnetic portion the force will always be in the same direction. Soft ferromagnetic materials are always attracted by a magnetic field while hard magnets can be repelled and attracted depending on the polarity of field and magnet.

The perpendicular mechanical force applied to a soft ferromagnetic material by a solenoid coil with N-turn winding that conducts electrical current I with cross-sectional area A at the ends of the coil, can be described as:

$$F = \mu_0 \mu_r^2 \frac{N^2 A}{2l^2} I^2$$

where $\mu_0$, $\mu_r$ and I are the magnetic permeability of free space, the relative permeability of a solenoid iron core and the solenoid length respectively.

The mechanical force in the taxel is therefore proportional to the square of the electrical current applied (for a hard ferromagnetic material the mechanical force applied will be a function of $I$ rather than $I^2$). Therefore supplying an electrical input signal at a particular frequency $f_1$ to the solenoid generates a proportional mechanical force with frequency $2f_1$. Therefore, for a magnetic portion formed from a soft ferromagnetic material, the first electrical input signal 104a may be selected to have a frequency of half the frequency of the mechanical resonance frequency of the first taxel 106a and the second electrical input signal 104b may be selected to have a frequency of half the frequency of the mechanical resonance frequency of the second taxel 106b.

To vibrate both the first and second taxels 106a and 106b simultaneously, the first and second electrical input signals can be applied simultaneously to the solenoid 102. Supplying sinusoidal electrical currents of the form $i(t) =$

*Isinωt* at two different frequencies $f_1$ and $f_2$ (where $\omega_1 = 2\pi f_1$ and $\omega_2 = 2\pi f_2$) results in the following mechanical force being applied to each taxel:

$$F = \mu_0 \mu_r^2 \frac{N^2 A}{2l^2} (i_1(t) + i_2(t))^2$$

$$= \mu_0 \mu_r^2 \frac{N^2 A}{2l^2} (I_1 \sin(\omega_1 t) + I_2 \sin(\omega_2 t))^2$$

$$= \mu_0 \mu_r^2 \frac{N^2 A}{2l^2} (I_1^2 \sin^2(\omega_1 t) + 2I_1 I_2 \sin(\omega_1 t) \sin(\omega_2 t) + I_2^2 \sin^2(\omega_2 t))$$

Therefore, when the first and second input signals 104a and 104b are input to the solenoid simultaneously, the solenoid converts the electrical power supplied at frequencies $f_1$ and $f_2$ from the first and second input signals 104a and 104b respectively to a mechanical force applied to each unattached end of the taxel at frequencies $2f_1$, $2f_2$ and $f_1 \pm f_2$, thereby producing vibrations at both taxels simultaneously.

Applying both the first and second electrical input signals 104a and 104b to the solenoid 102 therefore causes both the first and second taxels 106a and 106b to vibrate. Thus, in the example shown in Figure 1, the taxels can be both off (when neither the first or second input signals are applied to the solenoid 102), both vibrating, or either of the first and second taxels can be vibrating individually. Therefore the first and second taxels 106a and 106b can be controlled selectively which enables them to be integrated into a controllable taxel array e.g. to form a vibrotactile display. In some examples, the apparatus may comprise a controller (not shown) to selectively apply the first and second electrical input signals 104a and 104b to the solenoid 102, for example by controlling switches 105a and 105b.

When both electrical input signals 104a and 104b are applied to the solenoid individually, mechanical force at frequencies $2f_1$, $2f_2$ and $f_1 \pm f_2$, is created. As the energy input to the system is being split between producing vibrations at four different frequencies, the amplitude of each of these vibrations may be lower than when only a single frequency is produced (by inputting a single electrical input frequency). Therefore, in some examples, the controller may be suitable to apply the first and second electrical input signals 104a and 104b at a higher amplitude when both the first and second electrical input signals are applied at the same time and at a relatively lower amplitude when the first or second electrical input signals are being applied individually. The controller may use a look-up table to store which power level to use based on which taxels are required to be active at any given time. In some examples, the power consumption of the solenoid is approximately 300mW where this is the maximum coil power consumption which may be divided between two or more frequencies when exciting multiple taxels.

In some examples, the controller may be to apply the first and second electrical input signals 104a and 104b at different levels to provide different levels of vibration at the first and second taxels 106a and 106b. For example, to convey different information to a user.

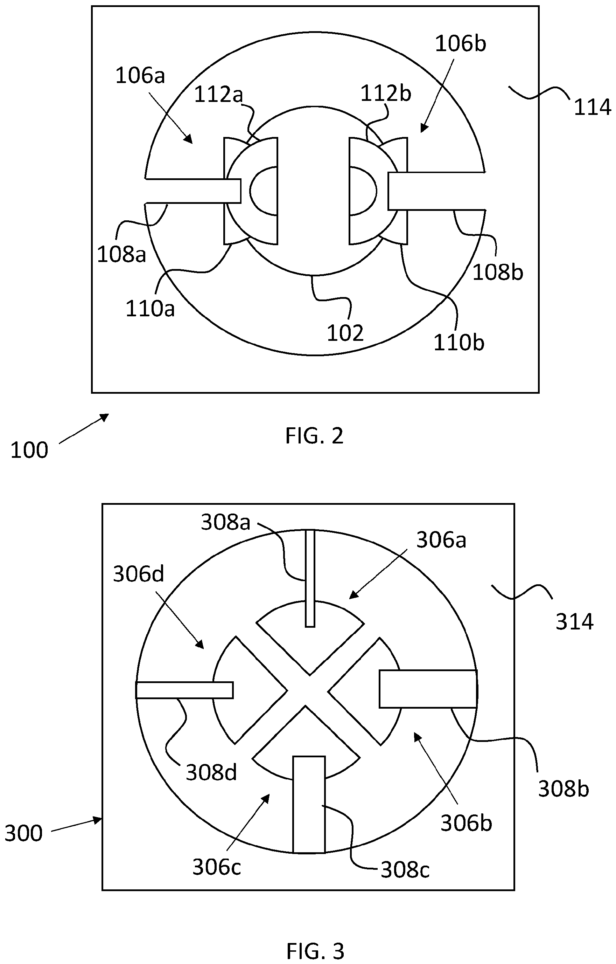

Figure 2 shows a top-down view of the apparatus 100 of Figure 1. In the example shown in Figure 2, the first taxel cantilever beam 108a and the second taxel cantilever beam 108b are each connected to a common frame 114 to support the taxels 106a and 106b.

As shown in Figure 2, the first taxel beam 108a has a smaller width than the width of the second taxel beam 108b, whilst other dimensions of the taxels are the same, so that the first taxel and the second taxel each have a different mechanical resonance frequency. In the example shown in Figure 2, the first taxel 106a has a lower resonance frequency than the second taxel 106b. Keeping the size of the tactile pad the same and controlling the resonance by adjusting the beam dimensions means that the touch sensation provided by the taxels to a user remains similar.

In some examples, the taxels and the frame may be produced by 3D printing (additive manufacturing) techniques. In some examples the first and second taxels and the frame may be formed by mass manufacture techniques such as injection-moulding, blow-moulding, vacuum-forming, stamping or other suitable technique. In some examples the taxels may be formed from PLA (polylactic acid), ABS (acrylonitrile butadiene styrene), rubber, or resinous, or other resilient and flexible materials. In some examples the taxels may be formed from silicon, for example, using MEMS fabrication techniques. In some examples the taxels and the frame may be made from a combination of these materials and/or using a combination of these techniques.

In the example shown in Figure 2 the first taxel 106a may be formed from PLA and may have an example mass at the unattached end of the beam 108a of between 0.1g and 0.5g and a beam stiffness of between 200N/m and 500N/m with example beam dimensions of 5mm (length), 0.3mm (thickness) and 1.5mm (width) to provide a mechanical resonance frequency which is perceivable by human skin mechanoreceptors (the somatosystem), for example a mechanical resonance frequency of approximately 60Hz. The second taxel 106b may be similar to the first taxel but with a beam width of 3mm such that the second taxel 106b has a mechanical resonance frequency around 70Hz The first electrical input frequency 104a may then be around 30Hz and the second electrical input frequency 104b may be around 35Hz. Where the magnetic portion of a taxel is a soft ferromagnetic material, the electrical input frequency for that taxel may be half the mechanical resonance frequency. Where the magnetic portion of the taxel is a hard ferromagnetic material, the electrical input frequency may be equal to the mechanical resonance frequency.

In some examples, three or more taxels may be selectively actuated using a single solenoid. For three taxels, the solenoid may have a further electrical input signal at a third frequency, wherein the third taxel has a mechanical resonance frequency such that applying the third electrical input signal to the solenoid causes the third taxel to vibrate at its mechanical resonance frequency.

Figure 3 shows a taxel array 300 comprising four taxels 306a, 306b, 306c and 306d configured to be actuated by a single solenoid, as described above in relation to Figure 1. In some examples, a taxel array may comprise two or more taxels, as described above in relation to Figures 1 and 2. The array 300 of Figure 3 has a frame 314 similar to apparatus 100. Each of the four taxels 306a to 306d is attached to the frame by a cantilever support beam 108a, 108b, 108c and 108d respectively. In the example shown in Figure 3, each of the taxels 306a to 306d has the same dimensions apart from the width of each of the cantilever support beams 108a to 108d, which is different for each taxel, such that each taxel has a different mechanical resonance frequency. In some examples, the mechanical resonance frequency of a particular taxel may be controlled by controlling a different dimension of the beam, or the mass at the unattached end of the taxel.

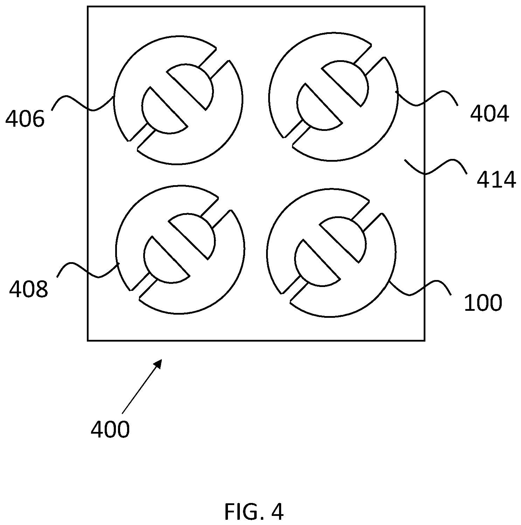

In some examples the apparatus 100 shown in Figures 1 and 2 may be arranged in an array with similar apparatuses to form a vibrotactile display 400. Figure 4 shows an example of such an array which comprises apparatus 100 along with three further such apparatuses 404, 406 and 408 to provide an array of 8 taxels. The vibrotactile display 400 may also comprise a controller (not shown) to selectively actuate each taxel. In some examples the vibrotactile display 400 may comprise a connector such as a USB connector or a wireless connection, to connect with another device such as a computer or mobile phone, to receive graphical information from said device to be represented on the vibrotactile display.

In some examples, the strength of vibration of each of the taxels in the display may be selectively controllable by controlling the amplitude of the electrical signals input to the solenoids. For example, the vibration strength of each taxel may be used to represent a level of intensity, lightness, darkness, color or another property of a pixel of the graphical information to be represented on the vibrotactile display.

In the example shown in Figure 4, each of the taxel apparatuses 100, 402, 404 and 408 share a single integral frame. This arrangement enables the array 400 to be efficiently manufactured, for example using 3D printing, or other mass-manufacture techniques such as injection moulding, vacuum forming, blow-moulding, stamping, or MEMS fabrication.

In the example of Figure 4, the array is an array of 2x2 solenoids with each solenoid actuating two taxels, however the solenoids can be arranged in other arrays such as 1xn or other nxn arrays. In some examples other arrangements of taxel apparatuses each comprising a set of two or more taxels along with a single solenoid may be provided in other formations to provide taxel arrays of different dimensions.

Linear (1xn) or complex (nxn) arrays of taxels could also be utilised for haptic feedback purposes. Such feedback conveys information without the user having to actually look at the device, examples of which include driver information or controller information.

In some examples, tactile pixels as described above may be included in vehicles e.g. cars, to provide haptic feedback e.g. about the environment around the car. For example, cars may include tactile feedback devices in their controls, for example in the steering wheel, and in the seat bolster; such devices may indicate deviation of lane, or provide other indications such as turning direction in navigation.

In some examples, computer controllers or computer games consoles may include tactile pixels as described above in order to provide haptic feedback. For example, Computer games consoles may be supplied with one or more immersive controllers that can provide detailed and more high-definition haptic feedback and sensations on the user. This allows games to be more realistic, for example recoil from firing a weapon may feel different from falling over or crashing a vehicle in the game environment.

In some examples, surgical simulation equipment, i.e. instruments used for surgeons to practice with, for example in virtual reality environments, may include tactile pixels as described above to provide haptic feedback.

The word "comprising" does not exclude the presence of elements other than those listed in a claim, "a" or "an" does not exclude a plurality, and a single unit may fulfil the functions of several units recited in the claims.

The features of any dependent claim may be combined with the features of any of the independent claims or other dependent claims.

The example dimensions given in the example embodiments described herein may vary for different application or different manufacturing techniques.

**Claims**

1. An apparatus (100) for providing vibrations, the apparatus (100) comprising:
a solenoid (102) having a first electrical input signal (104a) at a first frequency and a second electrical input signal (104b) at a second frequency; the apparatus **characterized by** comprising:

   a first taxel (106a), comprising a magnetic portion (110a), located above an end of the solenoid, wherein the first taxel has a first mechanical resonance frequency such that applying the first electrical input signal to the solenoid causes a magnetic force to be applied to the magnetic portion, causing the first taxel to vibrate;
   a second taxel (106b), comprising a magnetic portion (110b) located above the end of the solenoid, wherein the second taxel has a second mechanical resonance frequency, different from the first mechanical resonance frequency, such that applying the second electrical input signal to the solenoid causes a magnetic force to be applied to the magnetic portion, causing the second taxel to vibrate;
   wherein the first and second taxels each comprise a cantilever beam (108a, 108b) attached to a frame at an attached end, wherein the magnetic portion is located at an unattached end of the cantilever beam.

2. An apparatus according to claim 1, wherein the first taxel cantilever beam and the second taxel cantilever beam each have different dimensions.

3. An apparatus according to claim 2 wherein the first taxel cantilever beam and the second taxel cantilever beam each have different widths.

4. An apparatus according to claim 1, wherein the first taxel cantilever beam and the second taxel cantilever beam each have different masses located at their unattached ends; or
wherein the first taxel cantilever beam comprises a different material from the second taxel cantilever beam.

5. An apparatus according to any of claims 1 to 4 wherein the first and second taxels are attached to a single frame.

6. An apparatus according to claim 5 wherein the first and second taxels and the frame are formed by 3D printing techniques.

7. An apparatus according to any preceding claim wherein the magnetic portion comprises a soft ferromagnet.

8. An apparatus according to any preceding claim wherein the first and second taxels each comprise a tactile protrusion arranged to be touchable by a user of the apparatus.

9. An apparatus according to any preceding claim wherein the solenoid has a third electrical input signal at a third frequency;
the apparatus further comprising a third taxel, comprising a magnetic portion, located at an end of the solenoid, wherein the third taxel has a third mechanical resonance frequency, different from the first and second mechanical resonance frequencies, such that applying the third electrical input signal to the solenoid causes the third taxel to vibrate.

10. An apparatus according to claim 9, wherein the solenoid has a fourth electrical input signal at a fourth frequency;
the apparatus further comprising a fourth taxel, comprising a magnetic portion located above the end of the solenoid, wherein the fourth taxel has a fourth mechanical resonance frequency, different from the first, second and third mechanical resonance frequencies, such that applying the fourth electrical input signal to the solenoid causes the fourth taxel to vibrate.

11. An apparatus according to any preceding claim further comprising a controller, wherein the controller is suitable to apply the first electrical input signal to the solenoid to vibrate the first taxel, and/or apply the second electrical input signal to the solenoid to vibrate the second taxel, and to apply the first and second frequencies to vibrate the first taxel and the second taxel, either simultaneously or individually.

12. An apparatus according to claim 11 wherein the controller is suitable to control the amplitude of the first and/or second electrical input signal in order to control the vibration amplitude of the first and/or second taxel.

13. An apparatus according to claim 12, wherein the controller is suitable to control the first and second electrical input signals to each have a relatively higher amplitude when both the first and second electrical input signals are applied to the solenoid simultaneously and is to control the first and second electrical input signals to each have a relatively lower amplitude when the first and second electrical input signals are applied to the solenoid individually.

14. A vibrotactile display comprising a plurality of the apparatuses of claim 1, arranged in an array.

15. An apparatus comprising a vibrotactile display according to claim 14, wherein the apparatus comprises one of a steering wheel, a vehicle seat bolster, a computer controller, a games console controller and a surgical simulation instrument.

**Patentansprüche**

1.  Vorrichtung (100) zum Bereitstellen von Vibrationen, wobei die Vorrichtung (100) Folgendes umfasst:
    eine Magnetspule (102), die ein erstes elektrisches Eingangssignal (104a) mit einer ersten Frequenz und ein zweites elektrisches Eingangssignal (104b) mit einer zweiten Frequenz aufweist; wobei die Vorrichtung durch Folgendes gekennzeichnet ist:

    ein erstes Taxel (106a), umfassend einen magnetischen Abschnitt (110a), der sich über einem Ende der Magnetspule befindet, wobei das erste Taxel eine erste mechanische Resonanzfrequenz derart aufweist, dass ein Anlegen des ersten elektrischen Eingangssignals an die Magnetspule bewirkt, dass eine Magnetkraft auf den magnetischen Abschnitt aufgebracht wird, die bewirkt, dass das erste Taxel vibriert;
    ein zweites Taxel (106b), umfassend einen magnetischen Abschnitt (110b), der sich über dem Ende der Magnetspule befindet, wobei das zweite Taxel eine zweite mechanische Resonanzfrequenz, die sich von der ersten mechanischen Resonanzfrequenz unterscheidet, derart aufweist, dass ein Anlegen des zweiten elektrischen Eingangssignals an die Magnetspule bewirkt, dass eine Magnetkraft auf den magnetischen Abschnitt aufgebracht wird, die bewirkt, dass das zweite Taxel vibriert;
    wobei das erste und das zweite Taxel jeweils einen Ausleger (108a, 108b) umfassen, der an einem befestigten Ende an einem Rahmen befestigt ist, wobei sich der magnetische Abschnitt an einem unbefestigten Ende des Auslegers befindet.

2.  Vorrichtung nach Anspruch 1, wobei der erste Taxelausleger und der zweite Taxelausleger jeweils unterschiedliche Abmessungen aufweisen.

3.  Vorrichtung nach Anspruch 2, wobei der erste Taxelausleger und der zweite Taxelausleger jeweils unterschiedliche Breiten aufweisen.

4.  Vorrichtung nach Anspruch 1, wobei der erste Taxelausleger und der zweite Taxelausleger jeweils unterschiedliche Massen aufweisen, die sich an ihren unbefestigten Enden befinden; oder
    wobei der erste Taxelausleger ein anderes Material als der zweite Taxelausleger umfasst.

5.  Vorrichtung nach einem der Ansprüche 1 bis 4, wobei das erste und das zweite Taxel an einem einzigen Rahmen befestigt sind.

6.  Vorrichtung nach Anspruch 5, wobei das erste und das zweite Taxel und der Rahmen durch 3D-Drucktechniken gebildet sind.

7.  Vorrichtung nach einem der vorhergehenden Ansprüche, wobei der magnetische Abschnitt einen weichen Ferromagneten umfasst.

8.  Vorrichtung nach einem der vorhergehenden Ansprüche, wobei das erste und das zweite Taxel jeweils einen taktilen Vorsprung umfassen, der so angeordnet ist, dass er von einem Benutzer der Vorrichtung berührbar ist.

9.  Vorrichtung nach einem der vorhergehenden Ansprüche, wobei die Magnetspule ein drittes elektrisches Eingangssignal mit einer dritten Frequenz aufweist;
    wobei die Vorrichtung ferner ein drittes Taxel umfasst, das einen magnetischen Abschnitt umfasst, der sich an einem Ende der Magnetspule befindet, wobei das dritte Taxel eine dritte mechanische Resonanzfrequenz, die sich von der ersten und der zweiten mechanischen Resonanzfrequenz unterscheidet, derart aufweist, dass ein Anlegen des dritten elektrischen Eingangssignals an die Magnetspule bewirkt, dass das dritte Taxel vibriert.

**10.** Vorrichtung nach Anspruch 9, wobei die Magnetspule ein viertes elektrisches Eingangssignal mit einer vierten Frequenz aufweist. wobei die Vorrichtung ferner ein viertes Taxel umfasst, das einen magnetischen Abschnitt umfasst, der sich über dem Ende der Magnetspule befindet, wobei das vierte Taxel eine vierte mechanische Resonanzfrequenz, die sich von der ersten, zweiten und dritten mechanischen Resonanzfrequenz unterscheidet, derart aufweist, dass ein Anlegen des vierten elektrischen Eingangssignals an die Magnetspule bewirkt, dass das vierte Taxel vibriert.

**11.** Vorrichtung nach einem der vorhergehenden Ansprüche, ferner umfassend eine Steuerung, wobei die Steuerung geeignet ist, das erste elektrische Eingangssignal an die Magnetspule anzulegen, um das erste Taxel zum Vibrieren zu bringen, und/oder das zweite elektrische Eingangssignal an die Magnetspule anzulegen, um das zweite Taxel zum Vibrieren zu bringen, und die erste und die zweite Frequenz anzulegen, um das erste Taxel und das zweite Taxel entweder gleichzeitig oder einzeln zum Vibrieren zu bringen.

**12.** Vorrichtung nach Anspruch 11, wobei die Steuerung geeignet ist, die Amplitude des ersten und/oder zweiten elektrischen Eingangssignals zu steuern, um die Vibrationsamplitude des ersten und/oder zweiten Taxels zu steuern.

**13.** Vorrichtung nach Anspruch 12, wobei die Steuerung geeignet ist, das erste und das zweite elektrische Eingangssignal so zu steuern, dass sie jeweils eine relativ höhere Amplitude aufweisen, wenn sowohl das erste als auch das zweite elektrische Eingangssignal gleichzeitig an die Magnetspule angelegt werden, und das erste und das zweite elektrische Eingangssignal so zu steuern, dass sie jeweils eine relativ geringere Amplitude aufweisen, wenn das erste und das zweite elektrische Eingangssignal einzeln an die Magnetspule angelegt werden.

**14.** Vibrotaktile Anzeige, umfassend eine Vielzahl von Vorrichtungen nach Anspruch 1, die in einem Array angeordnet ist.

**15.** Vorrichtung, umfassend eine vibrotaktile Anzeige nach Anspruch 14, wobei die Vorrichtung eines von einem Lenkrad, einem Fahrzeugsitzpolster, einer Computersteuerung, einer Spielkonsolensteuerung und einem chirurgischen Simulationsinstrument umfasst.

## Revendications

**1.** Appareil (100) destiné à produire des vibrations, l'appareil (100) comprenant :

un solénoïde (102) ayant un premier signal électrique d'entrée (104a) à une première fréquence et un deuxième signal électrique d'entrée (104b) à une deuxième fréquence ;
l'appareil étant **caractérisé en ce qu'**il comprend :

un premier taxel (106a), comprenant une partie magnétique (110a), située au-dessus d'une extrémité du solénoïde, dans lequel le premier taxel a une première fréquence de résonance mécanique de telle sorte que l'application du premier signal électrique d'entrée au solénoïde provoque l'application d'une force magnétique à la partie magnétique, provoquant la vibration du premier taxel ;
un deuxième taxel (106b), comprenant une partie magnétique (110b) située au-dessus de l'extrémité du solénoïde, dans lequel le deuxième taxel a une deuxième fréquence de résonance mécanique, différente de la première fréquence de résonance mécanique, de telle sorte que l'application du deuxième signal électrique d'entrée au solénoïde provoque l'application d'une force magnétique à la partie magnétique, provoquant la vibration du deuxième taxel ;
dans lequel les premier et deuxième taxels comprennent chacun une poutre en porte-à-faux (108a, 108b) fixée à un cadre au niveau d'une extrémité fixée, dans lequel la partie magnétique est située au niveau d'une extrémité non fixée de la poutre en porte-à-faux.

**2.** Appareil selon la revendication 1, dans lequel la première poutre en porte-à-faux taxel et la seconde poutre en porte-à-faux taxel ont chacune des dimensions différentes.

**3.** Appareil selon la revendication 2, dans lequel la première poutre en porte-à-faux taxel et la seconde poutre en porte-à-faux taxel ont chacune des dimensions différentes.

**4.** Appareil selon la revendication 1, dans lequel la première poutre en porte-à-faux taxel et la seconde poutre en porte-à-faux taxel ont chacune des masses différentes situées à leurs extrémités libres ; ou dans lequel la première poutre en porte-à-faux taxel comprend un matériau différent de la seconde poutre en porte-à-faux taxel.

**5.** Appareil selon l'une quelconque des revendications 1 à 4, dans lequel les premier et deuxième taxels sont fixés sur un seul cadre.

**6.** Appareil selon la revendication 5, dans lequel les premier et deuxième taxels et le cadre sont formés par des techniques d'impression 3D.

**7.** Appareil selon une quelconque revendication précédente, dans lequel la partie magnétique comprend un ferroaimant doux.

**8.** Appareil selon une quelconque revendication précédente, dans lequel les premier et deuxième taxels comprennent chacun une saillie tactile agencée pour être tactile par un utilisateur de l'appareil.

**9.** Appareil selon une quelconque revendication précédente, dans lequel le solénoïde comprend un troisième signal électrique d'entrée à une troisième fréquence ; l'appareil comprend en outre un troisième taxel, comprenant une partie magnétique, situé à une extrémité du solénoïde, dans lequel le troisième taxel a une troisième fréquence de résonance mécanique, différente des première et deuxième fréquences de résonance mécanique, de telle sorte que l'application du troisième signal d'entrée électrique au solénoïde amène le troisième taxel à vibrer.

**10.** Appareil selon la revendication 9, dans lequel le solénoïde a un quatrième signal électrique d'entrée à une quatrième fréquence ; l'appareil comprend en outre un quatrième taxel, comprenant une partie magnétique, située au-dessus de l'extrémité du solénoïde, dans lequel le quatrième taxel a une quatrième fréquence de résonance mécanique, différente des première, deuxième et troisième fréquences de résonance mécanique, de telle sorte que l'application du quatrième signal d'entrée électrique au solénoïde amène le quatrième taxel à vibrer.

**11.** Appareil selon une quelconque revendication précédente, comprenant en outre un dispositif de commande, dans lequel le dispositif de commande est apte à appliquer le premier signal électrique d'entrée au solénoïde pour faire vibrer le premier taxel, et/ou à appliquer le deuxième signal électrique d'entrée au solénoïde pour faire vibrer le deuxième taxel, et à appliquer les première et deuxième fréquences pour faire vibrer le premier taxel et le deuxième taxel, soit simultanément, soit individuellement.

**12.** Appareil selon la revendication 11, dans lequel le dispositif de commande est apte à commander l'amplitude du premier et/ou du deuxième signal électrique d'entrée pour commander l'amplitude de vibration du premier et/ou du deuxième taxel.

**13.** Appareil selon la revendication 12, dans lequel le dispositif de commande est apte à commander les premier et deuxième signaux électriques d'entrée pour qu'ils aient chacun une amplitude relativement plus élevée lorsque les premier et deuxième signaux électriques d'entrée sont appliqués simultanément sur le solénoïde et à commander les premier et deuxième signaux électriques d'entrée pour qu'ils aient chacun une amplitude relativement plus faible lorsque les premier et deuxième signaux électriques d'entrée sont appliqués individuellement sur le solénoïde.

**14.** Dispositif d'affichage vibrotactile comprenant une pluralité d'appareils selon la revendication 1, agencés en réseau.

**15.** Appareil comprenant un dispositif d'affichage vibrotactile selon la revendication 14, dans lequel l'appareil comprend l'un d'un volant, d'une traverse de siège de véhicule, d'un dispositif de commande informatique, d'un dispositif de commande de console de jeu et d'un instrument de simulation chirurgicale.

FIG. 1

FIG. 2

FIG. 3

406

404

414

408

100

400

FIG. 4

**EP 4 049 116 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018253147 A1
- WO 2013118122 A1